# EUROPEAN PATENT SPECIFICATION

(11) **EP 2 889 556 B1**
(45) Date of publication and mention of the grant of the patent: **30.09.2020**
(21) Application number: 14200406.8
(22) Date of filing: 29.12.2014
(51) Int. Cl.: F25B 31/00, F25B 43/02

(54) **Air conditioner**
Klimaanlage
Climatiseur

(30) Priority: 26.12.2013 KR 20130163503
(43) Date of publication of application: 01.07.2015
(73) Proprietor: LG Electronics Inc., Yeongdeungpo-gu Seoul 150-721 (KR)
(72) Inventor: Yoon, Pilhyun, 153-802 Seoul (KR); Sa, Yongcheol, 153-802 Seoul (KR)
(74) Representative: Vossius & Partner Patentanwälte Rechtsanwälte mbB

(56) References cited:
- EP-A1- 1 367 259
- EP-A2- 0 672 875
- EP-A2- 1 659 351

## Description

The present invention relates to an air conditioner.

In general, air conditioners are apparatuses for cooling/heating an indoor space or purifying air using a refrigerant cycle including a compressor, a condenser, an expansion mechanism, and an evaporator so as to promote more pleasant environments for a user. Document EP 1 659 351 A2 discloses an air conditioner according to the preamble of claim 1.

Air conditioners are classified into air conditioners in which a single indoor unit is connected to a single outdoor unit and multi-type air conditioners in which a plurality of indoor units are connected to one or more outdoor units to provide an effect as if a plurality of air conditioners are installed.

Embodiments provide an air conditioner that is capable of maintaining an oil level within a compressor to a predetermined level.

In one embodiment, an air conditioner according to claim 1 is provided. The air conditioner includes: a compressor to compress a refrigerant; an oil sensor disposed in the compressor to detect oil stored in the compressor; an oil separator to separate the oil from the refrigerant discharged from the compressor; a first collection tube to collect the oil separated by the oil separator into the compressor; a second collection tube disposed at a height different from that of the first collection tube; an oil valve disposed in the second collection tube; and a control unit to control the oil valve on the basis of information detected by the oil sensor.

The oil valve comprises an electronic expansion valve of which an opening degree is adjustable.

The second collection tube connects the oil separator to the compressor, and the first collection tube has one side connected to the oil separator and the other side connected to the second collection tube.

A portion of the second collection tube to which the first collection tube is connected is disposed higher than the first collection tube.

A portion at which the first collection tube is connected to the second collection tube has a height equal to or less than that of a portion at which the second collection tube is connected to the oil separator with respect to a bottom surface of the oil separator.

A portion at which the second collection tube is connected to the oil separator is disposed higher than a portion at which the first collection tube is connected to the oil separator.

The air conditioner may further comprise a convergence part connected to the first and second collection tubes and connected to the compressor.

The convergence part is disposed higher than the first collection tube.

The convergence part has a height equal to or less than that of a portion at which the second collection tube is connected to the oil separator with respect to a bottom surface of the oil separator.

When a time at which the oil sensor detects the oil elapses a first reference time, the control unit increases the present opening degree of the oil valve to reduce a level of the oil stored in the compressor.

When a time at which the oil sensor does not detect the oil elapses a second reference time, the control unit decreases the present opening degree of the oil valve to increase a level of the oil stored in the compressor.

The air conditioner may further comprise a memory in which whether the oil sensor detects the oil when the opening degree of the oil valve is adjusted to a specific opening degree and a time taken until the oil sensor detects the oil after the opening degree is adjusted or a time taken until the oil sensor does not detect the oil are stored.

The control unit analyzes an oil level pattern within the compressor on the basis of the information stored in the memory to set a reference opening degree of the oil valve on the analyzed result, thereby adjusting the opening of the oil valve to the reference opening degree.

The oil sensor comprises a first oil sensor and a second oil sensor disposed at a position higher than that of the first oil sensor, the control unit decreases the present opening degree of the oil valve when the oil is not detected by the first oil sensor and increases the present opening degree of the oil valve when the oil is detected by the second oil sensor.

The air conditioner may further comprise a memory in which whether the first or second oil sensor detects the oil when the opening degree of the oil valve is adjusted to a specific opening degree and a time taken until the first or second oil sensor detects the oil after the opening degree is adjusted or a time taken until the first or second oil sensor does not detect the oil are stored, wherein the control unit analyzes an oil level pattern within the compressor on the basis of the information stored in the memory to set a reference opening degree of the oil valve on the analyzed result, thereby adjusting the opening of the oil valve to the reference opening degree.

The details of one or more embodiments are set forth in the accompanying drawings and the description below.

Reference will now be made in detail to the embodiments of the present invention, examples of which are illustrated in the accompanying drawings.
Fig. 1 is a schematic view illustrating a configuration of an air conditioner according to an embodiment.
Fig. 2 is a view of a state in which an oil separator and a compressor are connected to each other according to an embodiment.
Figs. 3 to 5 are views illustrating a flow of oil depending on an opening degree of an oil valve according to an embodiment.
Fig. 6 is a flowchart explaining a method of controlling the air conditioner according to an embodiment.
Fig. 7 is a view of a state in which an oil separator and a compressor are connected to each other according to another embodiment.
Fig. 8 is a flowchart explaining a method of controlling the air conditioner according to another embodiment.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the spirit or scope of the invention. To avoid detail not necessary to enable those skilled in the art to practice the invention, the description may omit certain information known to those skilled in the art. The following detailed description is, therefore, not to be taken in a limiting sense.

Also, in the description of embodiments, terms such as first, second, A, B, (a), (b) or the like may be used herein when describing components of the present invention. Each of these terminologies is not used to define an essence, order or sequence of a corresponding component but used merely to distinguish the corresponding component from other component(s). It should be noted that if it is described in the specification that one component is "connected," "coupled" or "joined" to another component, the former may be directly "connected," "coupled," and "joined" to the latter or "connected", "coupled", and "joined" to the latter via another component.

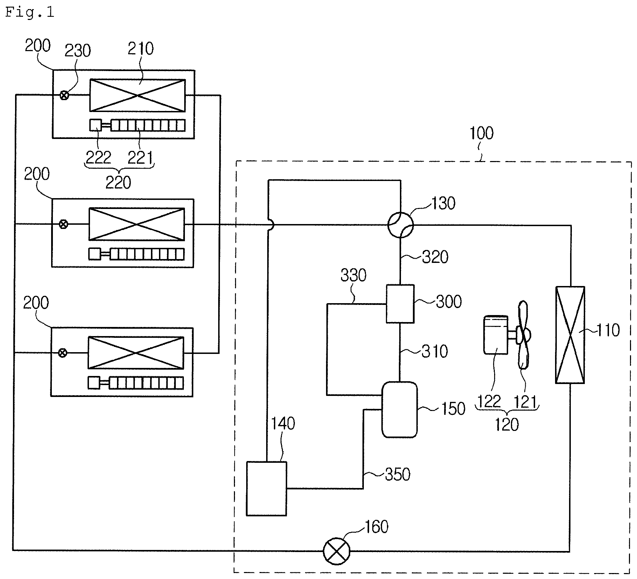

Fig. 1 is a schematic view illustrating a configuration of an air conditioner.

The air conditioner may include an indoor unit 200 for discharging conditioned air into an inner space and an outdoor unit 100 connected to the indoor unit 200.

The outdoor unit 100 and the indoor unit 200 may be connected to a refrigerant tube to discharge cold or hot air from the indoor unit 200 into the indoor space according to a circulation of a refrigerant. Although a plurality of indoor units 200 are connected to the outdoor unit 100 in Fig. 1, the current embodiment is not limited to the number of indoor unit 200.

The plurality of indoor units 200 and the outdoor unit 100 are connected to the refrigerant tube. In addition, the plurality of indoor units 200 and the outdoor unit 100 may be connected to each other through a communicable cable to transmit or receive a control command therebetween according to a predetermined communication manner.

The indoor unit 200 includes a discharge hole through which heat-exchanged air is discharged. Also, a wind direction adjustment unit for opening or closing the discharge hole and controlling a direction of the discharged air may be disposed in the discharge hole. Also, the indoor unit 200 may adjust an amount of air discharged from the discharge hole.

Also, the indoor unit 200 may further include a display unit for displaying an operation state or set information of the indoor unit 200 and an input unit for inputting set data. When a user inputs an operation starting command of the air conditioner through the input unit, the air conditioner may operate in a cooling mode or heating mode in respond to the inputted command.

Hereinafter, inner constitutions of the indoor unit 200 and the outdoor unit 100 of the air conditioner will be described.

The outdoor unit 100 may include an outdoor heat exchanger 110 in which indoor air and the refrigerant are heat-exchanged with each other, an outdoor blower 120 for blowing outdoor air into the outdoor heat exchanger 110, a compressor 150 for compressing the refrigerant, an accumulator 140 supplying a gaseous refrigerant of a liquid refrigerant and the gaseous refrigerant into the compressor 150, a four-way valve 130 for converting a flow direction of the refrigerant, and an outdoor electronic expansion valve 160 that is controlled according to supercooling and superheating degrees when the heating operation is performed.

When the air conditioner performs the cooling operation, the outdoor heat exchanger 110 may serve as a condenser. On the other hand, when the air conditioner performs the heating operation, the outdoor heat exchanger 110 may serve as an evaporator.

The outdoor blower 120 includes an outdoor fan motor 122 generating a power and an outdoor fan 121 connected to the outdoor fan motor 122 to rotate by the power of the outdoor fan motor 122, thereby generating a blowing force.

The indoor unit 200 may include an indoor heat exchanger 210 in which indoor air and the refrigerant are heat-exchanged with each other, an indoor blower 220 for blowing the indoor air into the indoor heat exchanger 20, and an indoor electronic expansion valve 230 that is an indoor flow rate adjustment part controlled according to supercooling and superheating degrees.

When the air conditioner performs the cooling operation, the indoor heat exchanger 210 may serve as an evaporator. On the other hand, when the air conditioner performs the heating operation, the indoor heat exchanger 210 may serve as a condenser.

The indoor blower 220 may include an indoor fan motor 222 generating a power and an indoor fan 221 connected to the indoor fan motor 222 to rotate by the indoor fan motor 222, thereby generating a blowing force. Also, the air conditioner may be provided as a cooler for cooling the indoor space or a heat mump for cooling or heating the indoor space.

As described above, the air conditioner includes a refrigerant tube through a refrigerant flows to perform the cooling or heating operation.

When the air conditioner performs the cooling or heating operation, the refrigerant is circulated into the refrigerant cycle to pass through the refrigerant tube. That is, when the air conditioner operates, the refrigerant compressed by the compressor 150 may be introduced into an oil separator 300 along a suction tube 310 together with oil discharged from the compressor 150. The oil separator 300 separates the refrigerant and oil that are introduced therein from each other. Here, the separated refrigerant may be discharged into the discharge tube 320. Also, the oil separated by the oil separator 300 may flow along an oil collection tube 330. The oil collection tube 330 may be connected to the compressor 150.

If an amount of oil introduced into the compressor 150 is too much or less, the compressor 150 may be deteriorated in performance. Thus, it may be necessary to adjust an amount of oil collected into the compressor 150 through the oil collection tube 330.

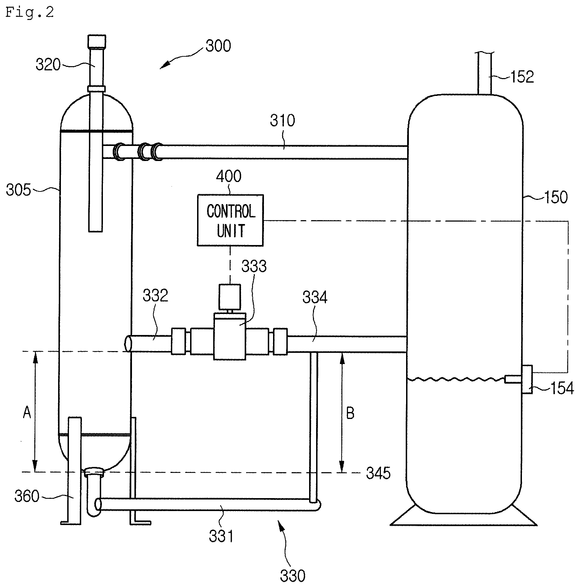

Fig. 2 is a view of a state in which the oil separator and the compressor are connected to each other according to an embodiment of the invention.

Referring to Fig. 2, the compressor 150 according to the invention includes an oil sensor 154 detecting the oil stored in the compressor 150.

The oil sensor 154 may be disposed at a height that corresponds to a level (hereinafter, referred to as a "reference level") of the oil adequately stored in the compressor 150.

The oil separator 300 includes a housing 305 defining an exterior thereof, a suction tube 310 connected to the housing 350 and into which the refrigerant and oil discharged from the compressor 150 are introduced, a discharge tube 320 through which the refrigerant separated from the oil is discharged, and an oil collection tube 330 through which the oil introduced through the suction tube 310 is collected into the compressor 150.

The oil separator 310 may further include a support 360 disposed on a bottom surface of the housing 305 to support a load of the housing 305.

The oil collection tube 330 includes a first collection tube 331 disposed in the bottom surface of the housing 305 to provide an oil collection path and a second collection tube 332 disposed in a side surface of the housing 305 to provide an oil collection path.

That is, the oil discharged from the compressor 150 into the oil separator 300 may be collected again into the compressor 150 through the first or second collection tube 331 or 332.

The first collection tube 331 communicates with the second collection tube 332. The first and second collection tubes 331 and 332 may be connected to a convergence part 334. Thus, the oil passing through the first or second collection tube 331 or 332 may be collected into the compressor 150 after being introduced into the convergence part 334. The second collection tube 332 connects the oil separator 300 to the compressor 150, and the first collection tube 331 is connected to the second collection tube 332.

A portion at which the second collection tube 332 is connected to the housing 305 may be higher than that at which the first collection tube 331 is connected to the housing 305.

If the bottom surface of the housing 305 is defined as a reference surface 345, a distance B from the reference surface 345 to the convergence part 334 may be equal to or less than that A from the reference surface 345 to an inlet of the second collection tube 332. This is done for preventing the oil flowing through the second collection tube 332 from flowing backward.

An oil valve 333 is disposed in the second collection tube 332. The oil valve 333 is an electronic expansion valve (EEV) of which an opening degree is adjustable. When the EEV is turned on, an opening degree is above zero. Also, the opening degree may be variable in the turn-on state of the EEV. On the other hand, when the EEV is turned off, the opening degree becomes to zero. The EEV may be adjusted in opening degree from zero to about 100%. In the current embodiment, if the opening degree is 100, the EEV may be in a fully opened state.

A control unit is connected to the oil valve 333 and the oil sensor 154 to control an operation, i.e., an opening degree of the oil valve 333 on the basis of information detected by the oil sensor 154.

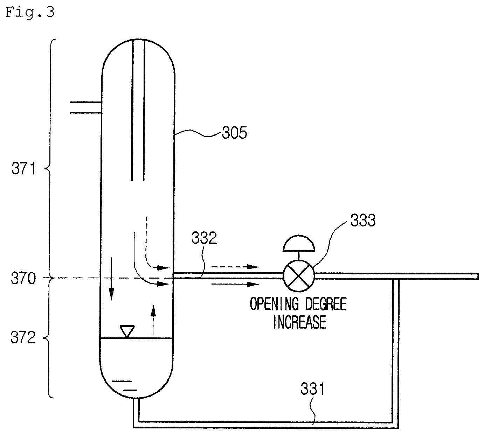

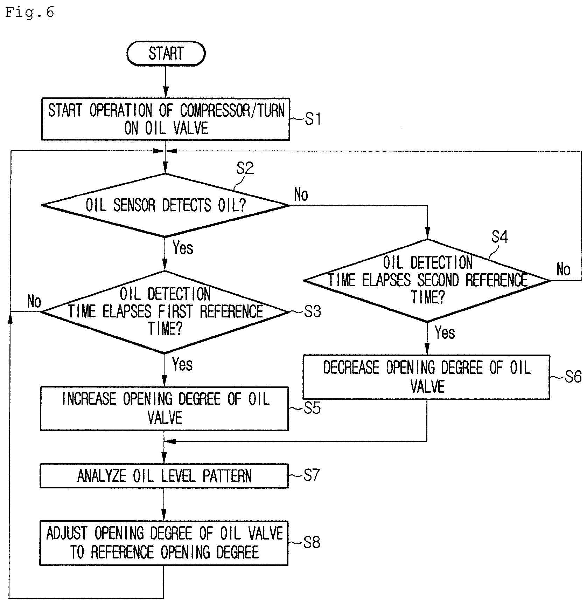

Figs. 3 to 5 are views illustrating a flow of oil depending on an opening degree of an oil valve according to the embodiment of the invention, and Fig. 6 is a flowchart explaining a method of controlling the air conditioner according to the embodiment.

Referring to Figs. 3, 4, and 6, in operation S1, when the air conditioner is turned on, and an operation of the compressor 150 starts, the oil valve 333 is turned on. Here, an opening degree (an initial opening degree) when the oil valve 333 is turned on may be preset.

The oil sensor 154 of the compressor 150 may detect oil. In operation S2, the control unit 400 determines whether the oil is detected by the oil sensor 154.

If the oil sensor 154 detects the oil in the compressor 150, an oil level may be above a reference level.

In the result determined in the operation S2, if the oil is detected by the oil sensor 154, the control unit 400 determines whether a time at which the oil is detected by the oil sensor 154 elapses a first reference time in operation S3.

A case where a time at which the oil sensor 154 detects the oil elapses a predetermined time may be a case where a time for which the oil is stored with the reference level or more even though the oil together with the refrigerant is discharged from the compressor 150, i.e., a case in which the oil is excessively stored.

In this case, it is necessary to reduce the oil level within the compressor 150.

In the result determined in the operation S3, when the time at which the oil is detected by the oil sensor 154 elapses the first reference time, an opening degree of the oil valve 333 increases from the present opening degree to reduce the oil level within the compressor 150 in operation S5.

In this specification, a virtual surface that extends from the second collection tube 332 in a horizontal direction of the housing 305 may be called an extension surface 370. In this case, a portion of the oil separator 300 corresponding to an upper side of the housing 305 with respect to the extension surface 370 may be called an upper portion 371, and a portion of the oil separator 300 corresponding to a lower side of the housing 305 with respect to the extension surface 370 may be called a lower portion.

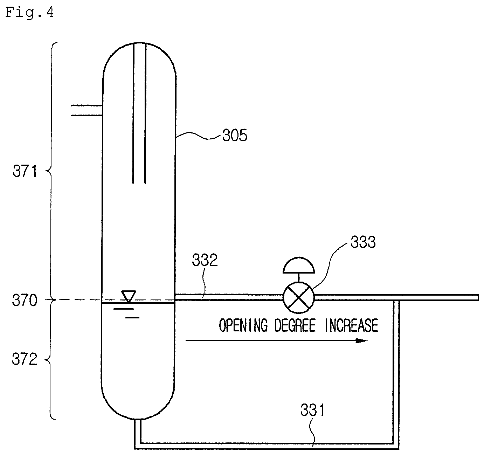

As illustrated in Figs. 3 and 4, when the opening degree of the oil valve 333 increases, a pressure difference between both ends of the oil valve 333 may be reduced. Thus, the oil stored in the lower portion 372 of the oil separator 300 may not flow into the first collection tube 331. Also, the oil separated from the oil separator 300 may drop into the lower portion 372 to increase an amount of oil stored in the oil separator 300.

The oil and refrigerant may be mixed with each other in the upper portion 371. A portion of each of the oil (see a slide line) and refrigerant (dotted line) within the upper portion 371 may be collected through the second collection tube 332. Of cause, since the oil is continuously discharged from the compressor 150, the oil level within the compressor 150 may be reduced.

Here, although the oil is collected into the compressor 150 through the second collection tube 332, since an amount of oil discharged from the compressor 150 is less than that of oil collected into the compressor 150, the oil level within the compressor 150 may be reduced.

On the other hand, in the result determined in the operation S2, if the oil is not detected by the oil sensor 154, the control unit determines whether a time at which the oil is not detected by the oil sensor 154 elapses a second reference time in operation S4.

A case where a time at which the oil is not detected in the compressor 150 excesses the second reference time may be a case where the oil is lack within the compressor 150.

Thus, in the result determined in the operation S4, when the time at which the oil is not detected by the oil sensor 154 elapses the second reference time, an opening degree of the oil valve 333 decreases from the present opening degree to increase the oil level within the compressor 150 in operation S6.

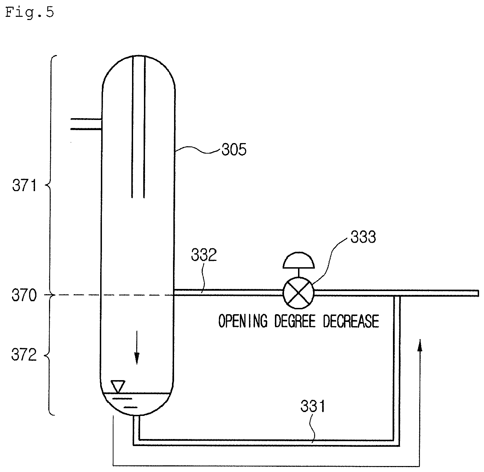

As illustrated in Fig. 5, when the opening degree of the oil valve 333 decreases, a pressure difference between both ends of the oil valve 333 may increase. Thus, the oil stored in the lower portion 372 of the oil separator 300 may flow through the first collection tube 331 and then be collected into the compressor 150 through the convergence part 334. Since the amount of oil collected into the compressor 150 is greater than that of oil discharged from the compressor 150, the oil level within the compressor 150 may increase.

Also, since the oil stored in the lower portion 372 is discharged through the first collection tube 331, an amount of oil stored in the lower portion 272 may be reduced.

The control unit 400 may analyze an oil level pattern depending on the opening degree of the oil valve 333 on the basis of the oil level detected by the oil sensor 154 of the compressor 150.

For example, whether the oil is detected by the oil sensor 154 at a specific opening degree of the oil valve 333 and a time that is taken until the oil is detected by the oil sensor 154 after the opening degree is adjusted or a time that is taken until the oil is not detected by the oil sensor 154 may be stored in a memory (not shown).

The more the opening degree of the oil valve 333 increases, the more the oil level within the compressor 150 increases in reduction rate. On the other hand, the more the opening degree of the oil valve 333 decreases, the more the oil level within the compressor 150 increases in increase rate.

If the increase rate of the oil level increases, the opening degree of the oil valve 333 has to be frequently adjusted. In this case, the oil level may not be maintained to the reference level, but be significantly changed.

Thus, in the current embodiment, the control unit 400 may analyze the oil level pattern on the basis of the information stored in the memory in operation S7 and also set a reference opening degree of the oil valve 333 on the basis of the analyzed result to adjust the opening degree of the oil valve 333 in operation S8 so that the adjustment number of opening degree of the oil valve 333 is minimized.

When the opening degree of the oil valve 333 is initially adjusted after the operation of the air conditioner starts, the reference opening degree may be the initial opening degree. Then, after the opening degree is repeatedly adjusted, the reference opening degree may be an opening degree of which a pattern is analyzed.

For example, when the opening degree of the oil valve 333 increases in order of opening degrees A, B, C, D, and E, the control unit 400 may control an opening degree of the oil valve 333 to increase from the present opening degree (it is assumed as the opening degree A) of the oil valve 333 to the opening degree E. In this case, after the opening degree is adjusted, the oil may be detected by the oil sensor 154. Here, a time that is taken until the oil is not detected by the oil sensor 154 due to the reduction of the oil level may be a time T1.

Next, the control unit 400 may control the opening degree of the oil valve 333 to decrease from the opening degree E to the opening degree B so that the oil level within the compressor 150 increases. In this case, after the opening degree is adjusted, the oil may not be detected by the oil sensor 154. Here, a time that is taken until the oil is not detected by the oil sensor 154 due to the reduction of the oil level may be a time T2.

Next, the control unit 400 may control the opening degree of the oil valve 333 to increase from the opening degree B to the opening degree D so that the oil level within the compressor 150 decrease. In this case, after the opening degree is adjusted, the oil may be detected by the oil sensor 154. Here, a time that is taken until the oil is not detected by the oil sensor 154 due to the reduction of the oil level may be a time T3 greater than the time T1.

Next, the control unit 400 may control the opening degree to decrease from the opening degree D to the opening degree C so that the oil level within the compressor 150 increases. In this case, after the opening degree is adjusted, the oil may not be detected by the oil sensor 154. Here, a time that is taken until the oil is not detected by the oil sensor 154 due to the reduction of the oil level may be a time T4 greater than the time T2.

As described above, the control unit 400 may determine a reference opening degree C (that is not limited), at which the adjustment number of opening degree decreases, through the adjustment of the opening degree of the oil valve 333.

Also, when the oil is detected or not detected by the oil sensor 154 after the oil valve 333 is adjusted in opening degree, the control unit 400 may control the opening degree of the oil valve 333 to increase to the reference opening degree C. When the oil valve 333 is opened by the reference opening degree C, the oil may be repeatedly detected or non-detected by the oil sensor 154.

Here, in the state where the oil is detected by the oil sensor 154, a time elapsing until the oil is not detected may be less than the first reference time. Also, in the state where the oil is not detected, a time elapsing until the oil is detected may be less than the second reference time.

In this case, since the conditions determined in the operations S3 and S4 are not satisfied, the opening degree of the oil valve 333 may be maintained to the present opening degree. Thus, when the opening degree of the oil valve 333 is set to the reference opening degree, the adjustment number of opening degree of the oil valve may be reduced.

Of cause, if it is necessary to adjust the opening degree by satisfying the condition determined in the operation S3 or S5 even after the opening degree of the oil valve 333 is set to the reference opening degree according to the operation condition of the compressor or the operation condition of the air conditioner. In this case, the control unit may adjust the reference opening degree through the analysis of the oil level pattern.

According to the current embodiment, since the oil level within the compressor is adjustable through the adjustment of the opening degree of the oil valve on the basis of the oil level detected by the oil sensor, the oil level within the compressor may be stably maintained to a predetermined level.

Also, since the opening degree of the oil valve is adjusted to the reference opening degree through the analysis of the oil level pattern, the adjustment number of opening degree of the oil valve may be minimized.

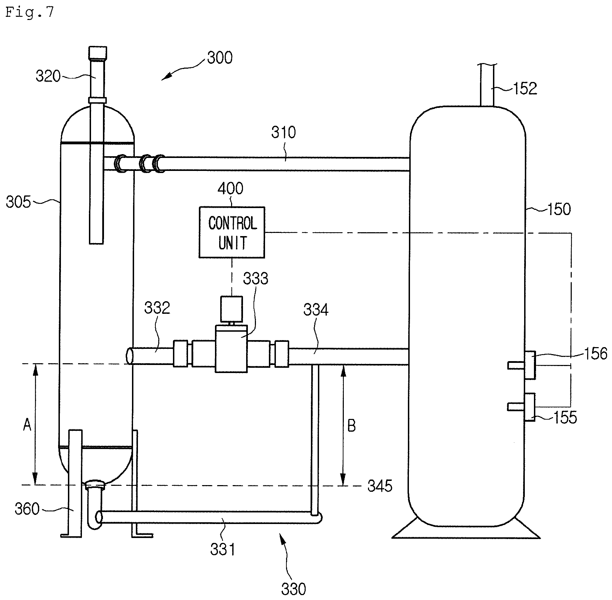

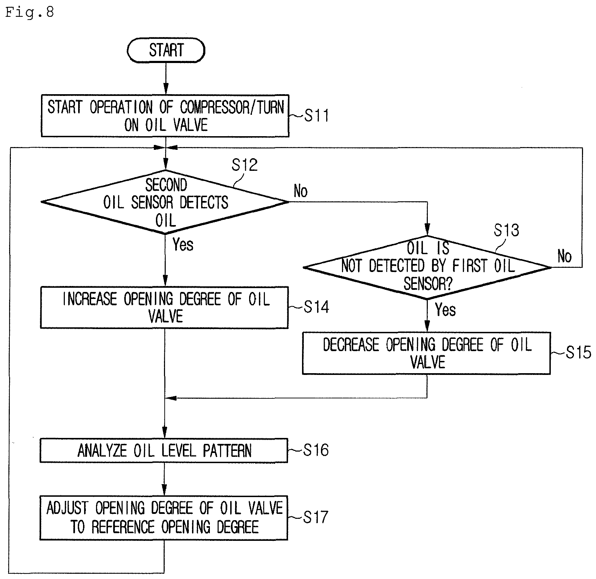

Fig. 7 is a view of a state in which an oil separator and a compressor are connected to each other according to another embodiment, and Fig. 8 is a flowchart explaining a method of controlling the air conditioner according to another embodiment.

The current embodiment is the same as the forgoing embodiment except that a compressor includes a plurality of oil sensors. Thus, only characterized parts in the current embodiment will be described below.

Referring to Fig. 7, a compressor 150 according to the current embodiment may include a first oil sensor 155 and a second oil sensor 156.

The first and second oil sensors 155 and 156 may be disposed at heights different from each other with respect to a bottom surface of the compressor 150 on which oil is stored. For example, the second oil sensor 156 may be disposed at a height greater than that of the first oil sensor 155.

In the current embodiment, each of the oil sensors 155 and 156 may be determined in height so that a reference level of the compressor 150 is disposed between the first and second oil sensors 155 and 156.

Referring to Fig. 8, in operation S11, when the air conditioner is turned on, and an operation of the compressor 150 starts, an oil valve 333 is turned on. Here, an opening degree (an initial opening degree) when the oil valve 333 is turned on may be preset.

In operation S12, a control unit 400 determines whether oil is detected by the second oil sensor 156.

The case in which the second oil sensor 156 detects the oil in the compressor 150 may be a case in which the oil is excessively stored.

Thus, in the result determined in the operation S12, when the oil is detected by the second oil sensor 156, the control unit 400 may control the opening degree of the oil valve 333 to increase to the present opening degree in operation S14.

On the other hand, in the result determined in the operation S12, when the oil is not detected by the second oil sensor 156, the control unit determines whether the oil is detected by the first oil sensor 155 in operation S13.

The case in which the oil is not detected by the first oil sensor 155 may be a case in which the oil is lack.

In the result determined in the operation S13, when the oil is not detected by the first oil sensor 155, the control unit 400 may control the opening degree of the oil valve 333 to decrease to the present opening degree so that an oil level within the compressor 150 increases in operation S15.

Also, in operation S16, the control unit 400 may analyze an oil level pattern depending on the opening degree of the oil valve 333 on the basis of the oil level detected by the first and second oil sensors 155 and 156 of the compressor 150. Also, in operation S17, the control unit 400 may set a reference opening degree of the oil valve 333 on the basis of the analyzed result to adjust the opening degree of the oil valve 333 to the reference opening degree.

Although embodiments have been described with reference to a number of illustrative embodiments thereof, it should be understood that numerous other modifications and embodiments can be devised by those skilled in the art that will fall within the scope of the invention, as defined by the claims.

## Claims

1. An air conditioner comprising:
a compressor (150) to compress a refrigerant;
an oil sensor (154, 155, 156) disposed in the compressor to detect oil stored in the compressor;
an oil separator (300) to separate the oil from the refrigerant discharged from the compressor;
a first collection tube (331) to collect the oil separated by the oil separator into the compressor;
a second collection tube (332), disposed at a height different from that of the first collection tube, to collect the oil separated by the oil separator into the compressor; , wherein the second collection tube (332) connects the oil separator (300) to the compressor (150);
an oil valve (333) disposed in the second collection tube (332), **characterized by**
a control unit (400) configured to control the oil valve (333) on the basis of information detected by the oil sensor (154, 155, 156),
wherein the oil valve (333) comprises an electronic expansion valve of which an opening degree is adjustable, and
wherein the first collection tube (331) has one side connected to the oil separator (300) and the other side connected to the second collection tube (332).

2. The air conditioner according to claim 1, wherein a portion of the second collection tube (332) to which the first collection tube (331) is connected is disposed higher than the first collection tube.

3. The air conditioner according to claim 2, wherein a portion at which the first collection tube (331) is connected to the second collection tube (332) has a height equal to or less than that of a portion at which the second collection tube (332) is connected to the oil separator (300) with respect to a bottom surface of the oil separator.

4. The air conditioner according to claim 1, wherein a portion at which the second collection tube (332) is connected to the oil separator (300) is disposed higher than a portion at which the first collection tube (331) is connected to the oil separator (300).

5. The air conditioner according to any one of claims 1 to 4, wherein the control unit (400) is arranged to, when a time at which the oil sensor detects the oil elapses a first reference time, increase the present opening degree of the oil valve (333) to reduce a level of the oil stored in the compressor (150).

6. The air conditioner according to claim 5, wherein, the control unit (400) is arranged to, when a time at which the oil sensor does not detect the oil elapses a second reference time, decrease the present opening degree of the oil valve (333) to increase a level of the oil stored in the compressor (150).

7. The air conditioner according to claim 6, further comprising a memory for storing information on whether the oil sensor detects the oil when the opening degree of the oil valve is adjusted to a specific opening degree and a time taken until the oil sensor detects the oil after the opening degree is adjusted or a time taken until the oil sensor does not detect the oil.

8. The air conditioner according to claim 7, wherein the control unit (400) is configured to analyze an oil level pattern within the compressor (150) on the basis of the information stored in the memory to set a reference opening degree of the oil valve (333) on the analyzed result, thereby adjusting the opening of the oil valve to the reference opening degree.

9. The air conditioner according to any one of claims 1 to 8, wherein the oil sensor comprises a first oil sensor (155) and a second oil sensor (156) disposed at a position higher than that of the first oil sensor (155),
Wherein the control unit (400) is arranged to decrease the present opening degree of the oil valve (333) when the oil is not detected by the first oil sensor (155) and to increase the present opening degree of the oil valve (333) when the oil is detected by the second oil sensor (156).

10. The air conditioner according to claim 9, further comprising a memory for storing information on whether the first or second oil sensor (155, 156) detects the oil when the opening degree of the oil valve (333) is adjusted to a specific opening degree and a time taken until the first or second oil sensor detects the oil after the opening degree is adjusted or a time taken until the first or second oil sensor does not detect the oil,
wherein the control unit (400) is configured to analyze an oil level pattern within the compressor (150) on the basis of the information stored in the memory to set a reference opening degree of the oil valve (333) on the analyzed result, thereby adjusting the opening of the oil valve to the reference opening degree.

## Patentansprüche

1. Klimaanlage mit:
einem Verdichter (150) zum Verdichten eines Kältemittels;
einem Ölsensor (154, 155, 156), der im Verdichter angeordnet ist, um im Verdichter gespeichertes Öl zu erfassen;
einem Ölabscheider (300), um das Öl vom Kältemittel zu trennen, das aus dem Verdichter ausgestoßen wird;
einer ersten Sammelleitung (331), um das durch den Ölabscheider abgeschiedene Öl im Verdichter zu sammeln;
einer zweiten Sammelleitung (332), die in einer Höhe angeordnet ist, die sich von der der ersten Sammelleitung unterscheidet, um das durch den Ölabscheider abgeschiedene Öl im Verdichter zu sammeln, wobei die zweite Sammelleitung (332) den Ölabscheider (300) mit dem Verdichter (150) verbindet;
einem Ölventil (333), das in der zweiten Sammelleitung (332) angeordnet ist, **gekennzeichnet durch**
eine Steuereinheit (400), die konfiguriert ist, das Ölventil (333) auf der Grundlage von Informationen zu steuern, die durch den Ölsensor (154, 155, 156) erfasst werden,
wobei das Ölventil (333) ein elektronisches Expansionsventil aufweist, dessen Öffnungsgrad einstellbar ist, und
wobei eine Seite der ersten Sammelleitung (331) mit dem Ölabscheider (300) verbunden ist und die andere Seite mit der zweiten Sammelleitung (332) verbunden ist.

2. Klimaanlage nach Anspruch 1, wobei ein Abschnitt der zweiten Sammelleitung (332), mit dem die erste Sammelleitung (331) verbunden ist, höher als die erste Sammelleitung angeordnet ist.

3. Klimaanlage nach Anspruch 2, wobei ein Abschnitt, an dem die erste Sammelleitung (331) mit der zweiten Sammelleitung (332) verbunden ist, bezüglich einer Bodenfläche des Ölabscheiders eine Höhe aufweist, die kleiner oder gleich der eines Abschnitts ist, an dem die zweite Sammelleitung (332) mit dem Ölabscheider (300) verbunden ist.

4. Klimaanlage nach Anspruch 1, wobei ein Abschnitt, an dem die zweite Sammelleitung (332) mit dem Ölabscheider (300) verbunden ist, höher als ein Abschnitt angeordnet ist, an dem die erste Sammelleitung (331) mit dem Ölabscheider (300) verbunden ist.

5. Klimaanlage nach einem der Ansprüche 1 bis 4, wobei die Steuereinheit (400) eingerichtet ist, den gegenwärtigen Öffnungsgrad des Ölventils (333) zu erhöhen, um einen Pegel des im Verdichter (150) gespeicherten Öls zu reduzieren, wenn eine Zeit, in der der Ölsensor das Öl erfasst, eine erste Referenzzeit verstreicht.

6. Klimaanlage nach Anspruch 5, wobei die Steuereinheit (400) eingerichtet ist, den gegenwärtigen Öffnungsgrad des Ölventils (333) zu senken, um einen Pegel des im Verdichter (150) gespeicherten Öls zu erhöhen, wenn eine Zeit, in der der Ölsensor kein Öl erfasst, eine zweite Referenzzeit verstreicht.

7. Klimaanlage nach Anspruch 6, die ferner einen Speicher zum Speichern von Informationen darüber, ob der Ölsensor das Öl erfasst, wenn der Öffnungsgrad des Ölventils auf einen spezifischen Öffnungsgrad eingestellt ist, und über eine benötigte Zeit, bis der Ölsensor das Öl erfasst, nachdem der Öffnungsgrad eingestellt worden ist, oder über eine benötigte Zeit aufweist, bis der Ölsensor kein Öl erfasst.

8. Klimaanlage nach Anspruch 7, wobei die Steuereinheit (400) konfiguriert ist, ein Ölpegelmuster im Verdichter (150) auf der Grundlage der im Speicher gespeicherten Informationen zu analysieren, um einen Referenzöffnungsgrad des Ölventils (333) beruhend auf dem analysierten Ergebnis festzulegen, wodurch die Öffnung des Ölventils auf den Referenzöffnungsgrad eingestellt wird.

9. Klimaanlage nach einem der Ansprüche 1 bis 8, wobei der Ölsensor einen ersten Ölsensor (155) und einen zweiten Ölsensor (156) aufweist, die auf einer höheren Position als der erste Ölsensor (155) angeordnet sind,
wobei die Steuereinheit (400) eingerichtet ist, den gegenwärtigen Öffnungsgrad des Ölventils (333) zu verringern, wenn kein Öl durch den ersten Ölsensor (155) erfasst wird, und den gegenwärtigen Öffnungsgrad des Ölventils (333) zu erhöhen, wenn das Öl durch den zweiten Ölsensor (156) erfasst wird.

10. Klimaanlage nach Anspruch 9, die ferner einen Speicher zum Speichern von Informationen darüber, ob der erste oder der zweite Ölsensor (155, 156) das Öl erfasst, wenn der Öffnungsgrad des Ölventils (333) auf einen spezifischen Öffnungsgrad eingestellt ist, und über eine benötigte Zeit, bis der erste oder der zweite Ölsensor das Öl erfasst, nachdem der Öffnungsgrad eingestellt worden ist, oder über eine benötigte Zeit aufweist, bis der erste oder der zweite Ölsensor kein Öl erfasst,
wobei die Steuereinheit (400) konfiguriert ist, ein Ölpegelmuster im Verdichter (150) auf der Grundlage der im Speicher gespeicherten Informationen zu analysieren, um einen Referenzöffnungsgrad des Ölventils (333) beruhend auf dem analysierten Ergebnis festzulegen, wodurch die Öffnung des Ölventils auf den Referenzöffnungsgrad eingestellt wird.

## Revendications

1. Climatiseur, comprenant :
un compresseur (150) destiné à comprimer un réfrigérant ;
un capteur d'huile (154, 155, 156) disposé dans le compresseur pour détecter l'huile stockée dans le compresseur ;
un séparateur d'huile (300) destiné à séparer l'huile du réfrigérant refoulé par le compresseur ;
un premier tuyau de collecte (331) destiné à recueillir l'huile séparée par le séparateur d'huile dans le compresseur ;
un deuxième tuyau de collecte (332), disposé à une hauteur différente de celle du premier tuyau de collecte, destiné à recueillir l'huile séparée par le séparateur d'huile dans le compresseur ;
le deuxième tuyau de collecte (332) reliant le séparateur d'huile (300) au compresseur (150) ;
une vanne d'huile (333) montée dans le deuxième tuyau de collecte (332), **caractérisé par** une unité de commande (400) prévue pour control la vanne d'huile (333) sur la base d'informations détectées par le capteur d'huile (154, 155, 156),
où la vanne d'huile (333) comprend une vanne de détente électronique dont le degré d'ouverture est réglable, et
où un côté du premier tuyau de collecte (331) est raccordé au séparateur d'huile (300), et l'autre côté au deuxième tuyau de collecte (332).

2. Climatiseur selon la revendication 1, où une partie du deuxième tuyau de collecte (332) à laquelle le premier tuyau de collecte (331) est raccordé est située plus haut que le premier tuyau de collecte.

3. Climatiseur selon la revendication 2, où une partie où le premier tuyau de collecte (331) est raccordé au deuxième tuyau de collecte (332) a une hauteur égale ou inférieure à celle d'une partie où le deuxième tuyau de collecte (332) est raccordé au séparateur d'huile (300) par rapport à une surface de fond du séparateur d'huile.

4. Climatiseur selon la revendication 1, où une partie où le deuxième tuyau de collecte (332) est raccordé au séparateur d'huile (300) est située plus haut qu'une partie où le premier tuyau de collecte (331) est raccordé au séparateur d'huile (300).

5. Climatiseur selon l'une des revendications 1 à 4, où, si un temps où le capteur d'huile détecte l'huile dépasse un premier temps de référence, l'unité de commande (400) est prévue pour augmenter le degré d'ouverture existant pour la vanne d'huile (333) afin d'abaisser le niveau de l'huile stockée dans le compresseur (150).

6. Climatiseur selon la revendication 5, où, si un temps où le capteur d'huile ne détecte pas l'huile dépasse un deuxième temps de référence, l'unité de commande (400) est prévue pour diminuer le degré d'ouverture existant pour la vanne d'huile (333) afin d'élever le niveau de l'huile stockée dans le compresseur (150).

7. Climatiseur selon la revendication 6, comprenant en outre une mémoire destinée à stocker des informations relatives à la détection d'huile par le capteur d'huile si le degré d'ouverture de la vanne d'huile est réglé à un degré d'ouverture spécifique et un temps écoulé jusqu'à ce que le capteur d'huile détecte l'huile après réglage du degré d'ouverture, ou un temps écoulé jusqu'à ce que le capteur d'huile ne détecte pas l'huile.

8. Climatiseur selon la revendication 7, où l'unité de commande (400) est prévue pour analyser une configuration de niveau d'huile à l'intérieur du compresseur (150) sur la base des informations stockées en mémoire afin de fixer un degré d'ouverture de référence de la vanne d'huile (333) sur la base du résultat d'analyse, en ajustant l'ouverture de la vanne d'huile au degré d'ouverture de référence.

9. Climatiseur selon l'une des revendications 1 à 8, où le capteur d'huile comprend un premier capteur d'huile (155) et un deuxième capteur d'huile (156) monté à un emplacement plus haut que celui du premier capteur d'huile (155),
où l'unité de commande (400) est prévue pour diminuer le degré d'ouverture existant pour la vanne d'huile (333) si l'huile n'est pas détectée par the premier capteur d'huile (155), et pour augmenter le degré d'ouverture existant pour la vanne d'huile (333) si l'huile est détectée par le deuxième capteur d'huile (156).

10. Climatiseur selon la revendication 9, comprenant en outre une mémoire destinée à stocker des informations relatives à la détection d'huile par le premier ou le deuxième capteur d'huile (155, 156) si le degré d'ouverture de la vanne d'huile (333) est réglé à un degré d'ouverture spécifique et un temps écoulé jusqu'à ce que le premier ou le deuxième capteur d'huile détecte l'huile après réglage du degré d'ouverture, ou un temps écoulé jusqu'à ce que le premier ou le deuxième capteur d'huile ne détecte pas l'huile,
où l'unité de commande (400) est prévue pour analyser une configuration de niveau d'huile à l'intérieur du compresseur (150) sur la base des informations stockées en mémoire afin de fixer un degré d'ouverture de référence de la vanne d'huile (333) sur la base du résultat d'analyse, en ajustant l'ouverture de la vanne d'huile au degré d'ouverture de référence.
